# EUROPÄISCHE PATENTSCHRIFT

(11) **EP 1 086 186 B1**
(45) Veröffentlichungstag und Bekanntmachung des Hinweises auf die Patenterteilung: **19.03.2003**
(21) Anmeldenummer: 99923576.5
(22) Anmeldetag: 11.05.1999
(51) Int. Cl.: C09J 103/02, B31F 1/28

(54) **VERFAHREN ZUR AUFBEREITUNG VON WELLPAPPENKLEBER**
METHOD FOR PREPARING AN ADHESIVE FOR CORRUGATED PAPERBOARD
PROCEDE POUR LA PREPARATION DE COLLE POUR CARTON ONDULE

(30) Priorität: 14.05.1998 DE 19821786
(43) Veröffentlichungstag der Anmeldung: 28.03.2001
(73) Patentinhaber: BVG Bauer-Verfahrenstechnik GmbH, 86926 Greifenberg (DE)
(72) Erfinder: POLZINGER, Rudolf, A-4594 Steinbach a.d. Steyr (AT)
(74) Vertreter: Leske, Thomas, Dr.
(86) Internationale Anmeldenummer: EP9903227
(87) Internationale Veröffentlichungsnummer: WO99058621

(56) Entgegenhaltungen:
- WO-A-98/04643
- US-A- 3 622 388
- CHEMICAL ABSTRACTS, vol. 95, no. 10, 7. September 1981 (1981-09-07) Columbus, Ohio, US; abstract no. 82753, XP002114132 & JP 56 047466 A (RENGO K.K.) 30. April 1981 (1981-04-30)
- CHEMICAL ABSTRACTS, vol. 114, no. 18, 6. Mai 1991 (1991-05-06) Columbus, Ohio, US; abstract no. 166659, XP002114133 & JP 03 012470 A (NIHON CORNSTARCH K.K.) 21. Januar 1991 (1991-01-21)
- PATENT ABSTRACTS OF JAPAN vol. 098, no. 004, 31. März 1998 (1998-03-31) & JP 09 328664 A (NIPPON SHOKUHIN KAKO CO LTD), 22. Dezember 1997 (1997-12-22)

## Beschreibung

Die Erfindung betrifft ein Verfahren zur Herstellung von Wellpappenkleber durch Viskositätsregelung des Trägers und des fertigen Klebers nach einem festen Wert (Konstante).

Wellpappenkleber haben eine breite Anwendung bei der Herstellung von Wellpappe. Sie werden bei der Verklebung von Welle mit der Decke eingesetzt. Als Klebstoff wird vorzugsweise native Stärke verwendet. Native Stärke ist der preiswerteste Ausgangsstoff für Wellpappenkleber. Um sie einsetzen zu können, wird sie im allgemeinen nach dem STEIN-HALL-Verfahren (US-A 2,102,937) aufbereitet. Dabei wird zunächst ein Träger hergestellt (verkleisterte Stärke), auch Primärstärke genannt, der dann mit nativer Stärke als Kleber, auch Sekundärstärke genannt, sowie anderen Stoffen (z.B. Borax, Naßfestmittel und modifizierte Stärken) angereichert werden.

Die Herstellung des Trägers (Primärstärke) erfolgt im allgemeinen in einem Behälter, der auf einer Waage steht und in dem zunächst eine bestimmte Menge Wasser vorgelegt wird (Batch-Prozeß). Dann folgt eine bestimmte Menge native Stärke als Trägerstärke, die in dem vorgelegten Wasser suspendiert wird. Diese Stärke wird durch Zugabe von Alkali, im allgemeinen in Form von Natronlauge, verkleistert (Stärke hat die Eigenschaft, bei einer bestimmten Alkalität - ca. pH 13 - kalt zu verkleistern). Beim STEIN-HALL-Verfahren wird soviel Natronlauge zugesetzt, bis die gesamte Trägerstärke verkleistert ist. In der Praxis hat sich gezeigt, daß es oft besser ist, nicht die gesamte Trägerstärke zu verkleistern, sondern nur einen Teil davon. Man spricht in diesem Fall vom "Minocar-Verfahren". Wie groß dieser Teil ist, wird durch die Viskosität des Trägerkleisters bestimmt. Um die Viskosität des Trägers während des Prozesses ständig zu kennen, muß die Viskosität online gemessen werden. Deshalb ist bei dem erfindungsgemäßen Vorschlag in dem Ansatzbehälter ein online-Viskosimeter eingebaut. Die Viskosität bildet die Regelstrecke x, die Zugabemenge an Natronlauge das Stellglied y und die charakteristische Viskosität für jeden Trägerkleister eine Konstante, der (den?) Sollwert w (η = η').

Es ist zwar ein Verfahren, das sogenannte Coromat-Verfahren, bekannt, in dem auch die Viskosität des Trägers mit der Zugabe von natronlauge geregelt wird, doch hier liegen die Verhältnisse wesentlich komplizierter. Entscheidender Unterschied ist, daß die gesamte Wassermenge am Anfang des Batch-Prozesses vorgelegt wird. Damit ist ein Abstoppen des weiteren Viskositätsanstiegs, durch Absenkung der Alkalität, bei Erreichen der Sollviskosität des Trägers nicht mehr möglich. Um dennoch auf einen Sollwert w regeln zu können, erfolgt bei diesem Verfahren eine Korrektur der Sollwertkurve (es handelt sich hier um keine Konstante) nach oben und unten, wenn die Toleranz der gewünschten Endviskosität um mehr als +/-1% über- bzw. unterschritten wird. Diese verschobene Endviskosität bildet dann eine neue Sollwertkurve. Nachteil dieses bekannten Verfahrens ist, daß ständige Korrekturen an der Sollwertviskosität durchgeführt werden müssen, und der gewünschte Sollwert praktisch nicht erreicht wird. Diese Regelabweichung wird umso größer, je mehr Anfangsparameter variiert werden, z.B. durch Einsatz von variierenden Mengen an Wasch- und Farbabwasser. Diese Wässer können sehr unterschiedliche pH-Werte aufweisen und können damit die Trägerviskosität erheblich beeinflussen.

Gemäß der Erfindung soll das bekannte Verfahren weiterentwickelt und effektiver und wirtschaftlicher gestaltet werden. Erfindungsgemäß wird die Viskosität des Wellpappenklebers während des Herstellungsprozesses mit einem online-Viskosimeter gemessen und geregelt und zwar ind er Weise, daß der Viskositätssollwert w des Trägers eine Konstante η' ist, die durch Zugabe von Alkali in einer definierten Reaktionszeit t' (Reaktionssollwert) erreicht wird. Dabei bildet eine Alkalipumpe das Stellglied y. Die Regelstrecke x ist die jeweilige Viskosität η, die sich durch die Alkalizugabe einstellt. Bei Erreichen der Sollwertviskosität η' am Ende der Reaktionszeit t' wird durch Zugabe einer definierten Menge Wasser (Sekundärwasser) ein weiterer Viskositätsanstieg verhindert. Nach Zugabe von Kleberstärke (Sekundärstärke) und weiteren Zusatzmitteln (Borax) wird mittels eines Dissolverrührwerkes das Produkt so lange gerührt, bis sich eine Endviskosität η' eingestellt hat.

Nach dem erfindungsgemäßen Verfahren können Wellpappenkleber mit verschiedenen Viskositäten hergestellt werden. Jeder Kleber basiert auf einer charakteristischen Träger- und Endviskosität, die als feste Größen (Konstante) vorgegeben werden. Auf diese Weise bleibt die Träger- und Endviskosität unabhängig von äußeren Einflüssen. Die jeweilige Sollviskosität wird in einer Rezepturverwaltung hinterlegt.

Insbesondere lassen sich mit dem erfindungsgemäßen Verfahren vorzugsweise Wellpappenkleber reproduzierbar herstellen, die beliebige Mengenanteile Waschwasser und Flexodruckwasser enthalten. Durch die Viskositätsregelung des Trägers werden deren Einflüsse auf die Viskosität des Trägers ausgeregelt.

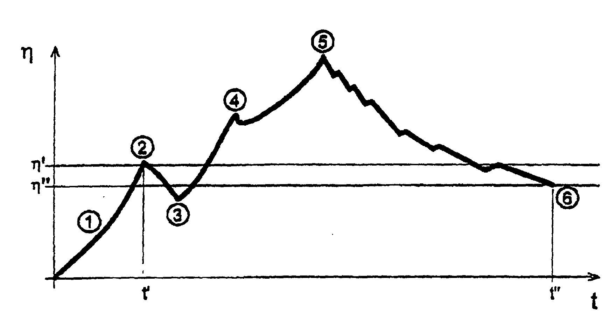

Das erfindungsgemäße Verfahren wird nachstehend an Hand der beigefügten Zeichnung erläutert.

Bei dem erfindungsgemäßen Verfahren (VVC-Verfahren, wobei V = Viskosity; C = Controlled und C = Carrier bedeutet) ist die Sollviskosität des Trägers η' konstant und ist damit unabhängig von äußeren Einflüssen. Die Sollwertviskosität η' wird durch schrittweise Zudosierung von Natronlauge mit der Natronlaugenpumpe erreicht. Die Zeit, in der die Zugabe erfolgt, ist die Reaktionszeit t'. Diese Zeit t' wird als Reaktionssollzeit vorgegeben und ist in der Rezepturverwaltung hinterlegt. Bei Erreichen der Sollwertviskosität η' wird eine definierte Menge Sekundärwasser zugegeben (siehe Graphik). Das führt zu einer Absenkung der Viskosität und Alkalität. Dadurch können keine weiteren Stärkekörner verkleistern - der Viskositätsanstieg ist gestoppt. Das ist sehr wichtig für die Reproduzierbarkeit des Verfahrens von Batch zu Batch.

Nach der Zugabe des Sekundärwassers folgt die Zugabe von Kleberstärke (Sekundärstärke). Dabei steigt die Viskosität wieder deutlich an. Schließlich folgt die Zugabe von Borax mit einem weiteren Viskositätsanstieg.

Damit sind alle Produkte in den Batch eingetragen. Jetzt folgt die Rührzeit, in der durch Scherung mit dem Dissolver-Rührwerk die Viskosität des Rührgutes langsam gesenkt wird. Das Rühren wird so lange fortgesetzt, bis die Viskosität des gesamten Ansatzes auf die Endsollviskosität η' gefallen ist. Damit ist der Ansatz beendet.

Der Wellpappenkleber ist jetzt fertiggestellt und kann der Weiterverarbeitung zugeführt werden.

### Bezugszeichenliste

- 1.: Zugabe von NaOH
- 2.: Erreichung der Trägersollviskosität η' in der Reaktionszeit t' Zugabe von Sekundärwasser
- 3.: Zugabe von Sekundärstärke
- 4.: Zugabe von Borax
- 5.: Ende Boraxdosierung Beginn der Scherzeit
- 6.: Erreichung der Endsollviskosität η''
- η: Viskosität in mPs
- t: Zeit in s

## Patentansprüche

1. Verfahren zur Herstellung von Wellpappenkleber auf der Basis des STEIN-HALL-Verfahrens,
**dadurch gekennzeichnet, daß**
es sich um einen Batch-Prozeß oder kontinuierlichen Prozeß handelt, und die Viskositäten des Trägers (Trägerviskosität) und des fertigen Wellpappenklebers (Endviskosität) mit einem Viskosimeter online gemessen werden und auf jeweils einen konstanten Wert (Trägersollviskosität η', Endsollviskosität η") geregelt werden.

2. Verfahren nach Anspruch 1, **dadurch gekennzeichnet, daß** die Trägerviskosität durch Zugabe von Alkali, insbesondere Natronlauge, geregelt wird.

3. Verfahren nach Anspruch 1, **dadurch gekennzeichnet, daß** die Trägersollviskosität η' in einer definierten Reaktionszeit t - der Reaktionszeit t' - erreicht wird.

4. Verfahren nach Anspruch 1, **dadurch gekennzeichnet, daß** bei Erreichen der Trägersollviskosität η' eine definierte Menge Sekundärwasser zugegeben wird.

5. Verfahren nach Anspruch 1, **dadurch gekennzeichnet, daß** die Endsollviskosität η" durch mechanische Scherung erreicht wird.

6. Verfahren nach Anspruch 1, **dadurch gekennzeichnet, daß** die Trägersollviskosität η' die Reaktionszeit t', die Endsollviskosität η" und die Sekundärwassersollmenge in einer Rezepturverwaltung hinterlegt werden.

7. Verfahren nach Anspruch 1, **dadurch gekennzeichnet, daß** für die Aufbereitung des Wellpappenklebers beliebige Mengenanteile Wasch- und Farbabwasser verwendet werden können, wobei diese Mengenanteile ebenfalls in der Rezepturverwaltung hinterlegt werden.

## Claims

1. Process for preparing corrugated paperboard adhesive based on the STEIN-HALL process, **characterized in that** is the process is a batch process or continuous process and the viscosities of the carrier (carrier viscosity) and the finished corrugated paperboard adhesive (final viscosity) are measured online by a viscometer and are each controlled to a constant value (predetermined carrier viscosity η', final predetermined viscosity η").

2. Process according to Claim 1, **characterized in that** the carrier viscosity is controlled by addition of alkali, in particular sodium hydroxide solution.

3. Process according to Claim 1, **characterized in that** the predetermined carrier viscosity η' is reached in a defined reaction time t - the reaction time t'.

4. Process according to Claim 1, **characterized in that** when the predetermined carrier viscosity η' is reached, a defined amount of secondary water is added.

5. Process according to Claim 1, **characterized in that** the final predetermined viscosity η" is achieved by mechanical shearing.

6. Process according to Claim 1, **characterized in that** the predetermined carrier viscosity η', the reaction time t', the final predetermined viscosity η" and the predetermined amount of secondary water are deposited in a formula management system.

7. Process according to Claim 1, **characterized in that** any desired proportions of washwater and ink wastewater can be used to prepare the corrugated paperboard adhesive, these proportions also being deposited in the formula management system.

## Revendications

1. Procédé de production de colle pour carton ondulé, basé sur le procédé STEIN-HALL,
**caractérisé en ce qu'**il s'agit d'un processus discontinu ou d'un processus continu, et les viscosités du véhicule (viscosité du véhicule) et de la colle pour carton ondulé prête à l'emploi (viscosité finale) sont mesurées en ligne avec un viscosimètre et sont réglées chacune à une valeur constante (viscosité prescrite du véhicule η', viscosité finale prescrite η'').

2. Procédé suivant la revendication 1,
**caractérisé en ce que** la viscosité du véhicule est réglée par addition d'une base alcaline, en particulier de lessive de soude.

3. Procédé suivant la revendication 1,
**caractérisé en ce que** la viscosité prescrite η' du véhicule est atteinte en un temps de réaction t défini, à savoir le temps de réaction t'.

4. Procédé suivant la revendication 1,
**caractérisé en ce qu'**une quantité définie d'eau secondaire est ajoutée lorsque la viscosité prescrite η' du véhicule est atteinte.

5. Procédé suivant la revendication 1,
**caractérisé en ce que** la viscosité finale prescrite η'' est atteinte par cisaillement mécanique.

6. Procédé suivant la revendication 1,
**caractérisé en ce que** la viscosité prescrite η' du véhicule, le temps de réaction t', la viscosite finale prescrite η'' et la quantité prescrite d'eau secondaire sont consignés dans une gestion de formulation.

7. Procédé suivant la revendication 1,
**caractérisé en ce que** des proportions quantitatives quelconques d'eaux résiduaires de lavage et de coloration peuvent être utilisées pour la préparation de la colle pour carton ondulé, ces proportions quantitatives étant également consignées dans la gestion de la formulation.
